# EUROPÄISCHE PATENTANMELDUNG

(11) **EP 0 650 801 A1**
(43) Veröffentlichungstag der Anmeldung: **03.05.1995**
(21) Anmeldenummer: 94810595.2
(22) Anmeldetag: 12.10.1994
(51) Int. Cl.: B23Q 5/26, F01C 21/08, F04C 2/344

(54) **Pneumatische Positioniereinrichtung**

(30) Priorität: 29.10.1993 CH 3264/93
(71) Anmelder: Ing. Büro H. Schellenberg, CH-8620 Wetzikon (CH)
(72) Erfinder: Fehr, Robert, CH-8307 Effretikon (CH)
(74) Vertreter: Bruderer, Werner

(57) **Zusammenfassung**

Die Einrichtung umfasst eine pneumatische Antriebseinheit (1), welche über ein Getriebe (9) oder direkt mit einem Vorschubelement (7) verbunden ist. Die Antriebseinheit (1) enthält einen um die Längsachse (28) drehbaren Rotor, an dessen Umfang in Längsrichtung Dichtleisten angeordnet sind. Entlang eines Teilbereiches des Mantels des Rotors ist ein Arbeitsraum angeordnet. Dieser Arbeitsraum wird mittels der Dichtleisten und zusätzlichen Druckausgleichkanälen in zwei Druckkammern mit kleinem Volumen unterteilt. Ueber ein Ventil (4) und eine Positionssteuerung (3) wird der Zu- und Abfluss von Druckluft zu diesen Druckkammern und damit die Drehbewegungen des Rotors gesteuert. Die Positioniereinrichtung weist nur kleine wirksame Luftvolumen auf, welche unabhängig vom Weg des Vorschubelementes (7) und über den ganzen Steuerbereich immer etwa gleich gross sind.

## Beschreibung

Die Erfindung betrifft eine pneumatische Positioniereinrichtung, bestehend aus einer pneumatischen Antriebseinheit, mindestens einem mit der Antriebseinheit verbundenen Mitnehmerelement, einer Positionssteuerung für das Mitnehmerelement und einem Steuerventil für die Druckluft.

Pneumatische Positioniereinrichtungen, welche zwischen zwei, in Sonderfällen drei oder mehr bestimmten Positionen verfahren werden können, werden häufig bei Produktions- und Montageeinrichtungen eingesetzt. Bekannt sind auch servopneumatische Antriebe, welche das Anfahren von beliebig vielen, bestimmten Positionen ermöglichen. Derartige servopneumatische Antriebe verfügen in bekannter Weise über eine pneumatische Antriebseinheit in der Form eines Pneumatikzylinders. Die Kolbenstange bzw. der Kolben ist dabei mit einem Mitnehmerelement verbunden, welches mit dem zu positionierenden Objekt zusammenwirkt. Die Steuerung des Pneumatikzylinders erfolgt über eine Positionssteuerung und ein Steuerventil für die Druckluft. Mit einer derartigen Anordnung lassen sich lineare Antriebs- und Positioniereinrichtungen bilden, welche schnell arbeiten und kostengünstig in der Herstellung sind. Insbesondere bei Positioniereinrichtungen mit grossem Verfahrweg treten jedoch im Pneumatikzylinder grosse, luftgefüllte Räume auf. Diese luftgefüllten Räume wirken wie Federn, da sich die Luft zusammendrücken lässt. Dies hat zur Folge, dass die genaue Positionierung sehr schwierig wird und entsprechend aufwendige und komplizierte Regelkreise und Steuerungen notwendig werden. Abhängig von der Position des Kolbens im Zylinder verändert sich die Grösse der luftgefüllten Räume und damit auch deren Federkonstante. Da diese Veränderungen relativ komplizierten Gesetzmässigkeiten folgen, können sie mit der Steuerung nur mit grossem Aufwand ausgeregelt werden. Die für die Korrektur notwendigen, in der Positionssteuerung eingebauten Regelkreise sind entsprechend aufwendig. Dies macht derartige pneumatische Positionierantriebe für genaue Positioniervorgänge sehr teuer.

Für genaue Positioniereinrichtungen und Positionierantriebe ist es bekannt, den Pneumatikzylinder durch eine möglichst starre mechanische Einrichtung zu ersetzen und als Antrieb einen für Positionieraufgaben geeigneten Elektromotor zu verwenden. Mit dieser Lösung kann der Nachteil der im Pneumatikzylinder vorhandenen Luftpolster vermieden werden. Dafür treten aber andere Nachteile auf, indem die üblichen Elektroantriebe beispielsweise in explosionsgefährdeter Umgebung nicht eingesetzt werden können. Die für Positionieraufgaben oft verwendeten elektrischen Schrittmotoren sind nur in niedrigen Leistungsbereichen verfügbar. Sie sind in den üblichen Ausführungen auch nicht überlastbar, weil sie Teil einer offenen Regelstrecke sind. Die ebenfalls verwendeten, voll regelbaren DC- und AC-Servomotoren sind, wegen ihren aufwendigen elektrischen Leistungsteilen, für Positioniereinrichtungen im Bereiche der pneumatischen Produktions- und Montageeinrichtungen zumeist viel zu teuer. Ein gemeinsamer Nachteil der elektrischen Antriebe besteht darin, dass diese mit höheren elektrischen Spannungen arbeiten, sobald übliche Leistungen gefordert werden und dadurch entsprechende Personenschutz-Massnahmen notwendig sind.

Es ist Aufgabe der vorliegenden Erfindung, eine Positioniereinrichtung zu schaffen, welche pneumatisch angetrieben ist, bei welcher in der Antriebseinheit nur kleine Luftvolumen wirksam sind und diese Luftvolumen unabhängig vom Positionierweg immer etwa gleich gross sind, ohne aufwendige elektrische Leistungsteile schnelle und langsame Bewegungen möglich sind, zudem die Länge des Positionierweges in keiner Richtung beschränkt ist, und zudem die Einrichtung in einfacher und kostengünstiger Weise für Linearantriebe oder Drehantriebe einsetzbar ist und das ganze Spektrum des Leistungsbereiches für Positioniereinrichtungen abdeckbar ist.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Bei der erfindungsgemässen Einrichtung sind zwischen dem Steuerventil und dem bewegten Element in der Antriebseinheit nur kleine Luftvolumen vorhanden. Die Verwendung eines in einem Stator gelagerten Rotors, an dessen Umfang verteilt mehrere Dichtleisten angeordnet sind, ermöglicht eine kompakte Bauweise. Der im Stator entlang eines Teilbereiches des Umfanges des Rotors angeordnete Arbeitsraum entspricht dabei dem Arbeitsraum eines bekannten linearen Pneumatikzylinders, und die in diesen Arbeitsraum eingreifende und aktiv wirkende, mindestens eine Dichtleiste kann als mit dem Kolben gleichwertig betrachtet werden. Beidseits dieser mindestens einen aktiven Dichtleiste ist je eine Druckkammer gebildet. Ueber zwei mit den beiden Druckkammern verbundene Druckluftleitungen ist der Druck in diesen Kammern veränderbar. Besteht zwischen den beiden Kammern eine Druckdifferenz, so dreht sich der Rotor infolge der auf die Dichtleisten wirkenden Kräfte um die Rotationsachse und treibt damit eine Antriebswelle an. Mit dieser Antriebswelle können verschiedene an sich bekannte Antriebsmittel verbunden sein, insbesondere ein Zahnradgetriebe, ein Kugelgewindetrieb, ein Zahnstangentrieb oder ein Zahnriementrieb. Mit der erfindungsgemässen Einrichtung lassen sich somit lineare, aber auch rotatorische Positioniereinrichtungen bilden. Die Antriebseinrichtungen, wie beispielsweise die Mutter eines Kugelgewindetriebes, bilden dabei die Träger für die Mitnehmer, welche die Bewegungen an die zu positionierenden Elemente übertragen.

Die erfindungsgemässe Einrichtung ermöglicht mehrere Ausgestaltungen des Arbeitsraumes zwischen dem Rotor und dem Stator. Ist der Arbeitsraum als zusätzlicher Hohlraum in den Stator eingearbeitet, so fällt die Achse des eigentlichen Statorhohlraumes mit der Rotationsachse zusammen. Dies ergibt den Vorteil eines achssymmetrischen Zusammenbaues der Bauteile. Bei der Ausführung, bei welcher die Längsachse des Statorhohlraumes exzentrisch zur Rotationsachse angeordnet ist, wird der Statorhohlraum kreisförmig ausgebildet, wobei der Innendurchmesser grösser ist als der Aussendurchmesser des Rotors. Dadurch wird zwischen dem Rotor und dem Stator ein sichelförmiger Hohlraum gebildet, welcher den Arbeitsraum bildet. Diese Ausführungsform bringt den Vorteil mit sich, dass der Statorhohlraum einfacher herstellbar ist.

Die Verbindung der erfindungsgemässen pneumatischen Antriebseinheit mit einer mechanischen Antriebseinrichtung für den Mitnehmer ergibt den Vorteil einer genau positionierbaren Positioniereinrichtung, bei welcher über den gesamten Positionierweg gleichbleibende Bedingungen bezüglich Regelverhalten und Starrheit herrschen. Dies unabhängig davon, ob sich der Mitnehmer in der Nähe der Endbereiche des Verschiebeweges oder irgendwo zwischen diesen Endbereichen befindet. Die beiden Arbeitskammern im Arbeitsraum des Stators der pneumatischen Antriebseinheit weisen immer etwa das gleiche Volumen auf, und zwar unabhängig vom Verschiebeweg und von der Position des Mitnehmers. Durch Verändern der Abmessungen des Rotors bzw. Statorhohlraumes und Arbeitsraumes, sowie der Dichtleisten lässt sich die pneumatische Antriebseinheit auch in relativ einfacher Weise an verschiedene Leistungen und Anforderungen anpassen. Die Messung des Positionierweges und auch die Steuerung der genauen Position kann über bekannte und relativ kostengünstige Winkelmesseinrichtungen in der Form von Inkrementalgebern oder Resolvern erfolgen. Diese Einrichtungen werden direkt auf die Achse des Rotors aufgesetzt, und es sind in diesem Falle keine teuren, oftmals nur mit Schwierigkeiten anbaubaren, linearen Messeinrichtungen notwendig.

Infolge der direkten mechanischen Verbindung zwischen Mitnehmer und diesen Wegmessern ergibt sich der weitere Vorteil, dass auch kleinste Abweichungen von der Position feststellbar sind, ohne dass zusätzliche mechanische Rückführungen notwendig sind. Bei der Festlegung einer genauen Position des Mitnehmers ist diese in einem sehr engen Bereich steuerbar, da die positionsbestimmende Dichtleiste zwischen zwei nur kleinen Luftvolumen eingespannt ist. Dies führt unter anderem zum Vorteil, dass mit höheren Drücken gearbeitet und damit die Steifigkeit des Gesamtsystems erhöht werden kann.

Je ein Endbereich der beiden Druckausgleichkanäle, welche aussen an den Druckkammern anliegen, bildet in vorteilhafter Weise je eine Steuerkante, welche mit den Aussenflächen der Dichtleisten zusammenwirken. Der Abstand zwischen den beiden Eintrittsöffnungen ist dabei so bemessen, dass sich immer mindestens eine Dichtleiste in diesem Zwischenbereich befindet und an der dazwischenliegenden Dichtfläche anliegt, und die beiden mit den Druckluftleitungen verbundenen Arbeitsräume immer von einander getrennt bleiben. Die Länge der Dichtfläche ist dabei in einfacher Weise an die Bedürfnisse der Steuerung anpassbar.

Im folgenden wird die Erfindung anhand von Ausführungsbeispielen, unter Bezugnahme auf die beiliegenden Zeichnungen, näher erläutert. Es zeigen:
- Fig. 1: eine schematische Darstellung einer erfindungsgemässen pneumatischen Positioniereinrichtung,
- Fig. 2: einen Querschnitt durch die pneumatische Antriebseinheit im Bereiche des Arbeitsraumes mit einem zusätzlich eingearbeiteten Hohlraum,
- Fig. 3: einen Querschnitt durch die pneumatische Antriebseinheit im Bereich des Arbeitsraumes mit exzentrischem Statorhohlraum,
- Fig. 4: einen teilweisen Längsschnitt durch die pneumatische Antriebseinheit mit angebauten Zusatzelementen.

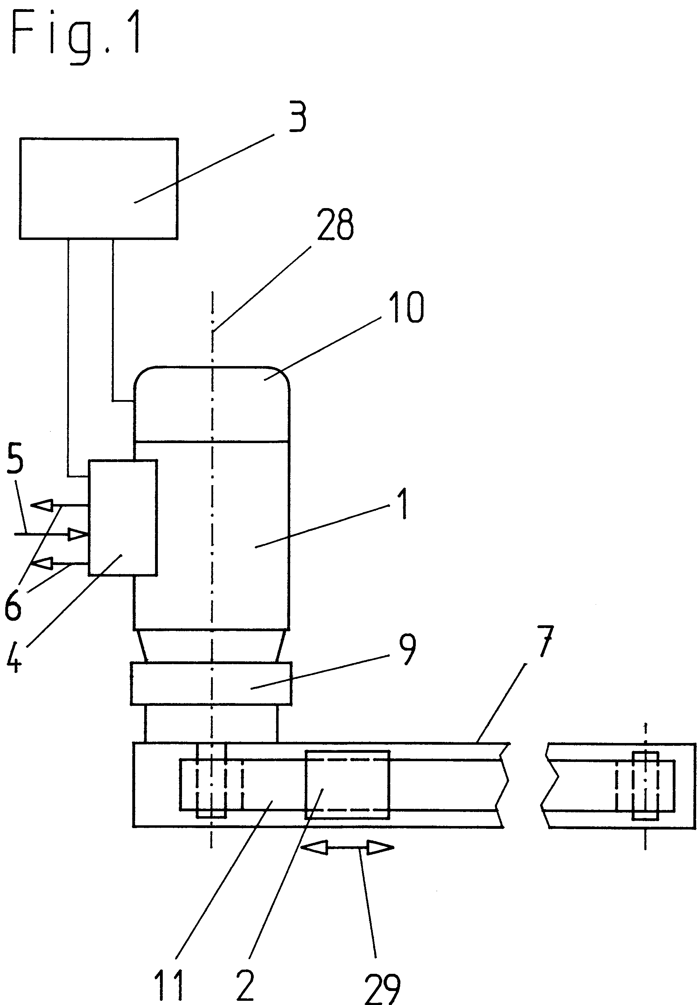

In Fig. 1 ist eine pneumatische Positioniereinrichtung dargestellt, welche aus der pneumatischen Antriebseinheit 1 und einem Vorschubelement 7 in der Form eines Zahnriementriebes besteht. Je auf einer Seite der pneumatischen Antriebseinheit 1 sind auf der Rotationsachse 28 ein Getriebe 9 und ein Drehwinkelsensor 10 aufgebaut. Mit der pneumatischen Antriebseinheit 1 verbunden ist ein Steuerventil 4 für die Druckluft, welche über die Druckluftleitung zugeführt wird. Die Abluft kann am Steuerventil 4 gefasst und über die Abluftleitungen 6 weggeführt oder direkt in die Umgebung abgegeben werden. Die Steuerung der Antriebseinheit 1 erfolgt über eine elektrische bzw. elektronische Positionssteuerung 3. Der Zahnriementrieb 11 wirkt mit einem Mitnehmerelement 2 zusammen, welches mit Hilfe des Zahnriementriebes 11 in Richtung der Pfeile 29 verschiebbar bzw. positionierbar ist. Dieses Mitnehmerelement 2 kann in bekannter Weise mit einem Schlitten, einem Schiebeelement, einem Greifer oder ähnlichen bekannten Elementen verbunden sein. Je nach Einsatzzweck und Bedarf ist der Zahnriementrieb 11 auch durch ein anderes Vorschubelement, insbesondere ein Kugelgewindetrieb oder ein Zahnstangentrieb für Linearantriebe oder ein Zahnradgetriebe oder ein Riementrieb für rotative Antriebe, ersetzbar.

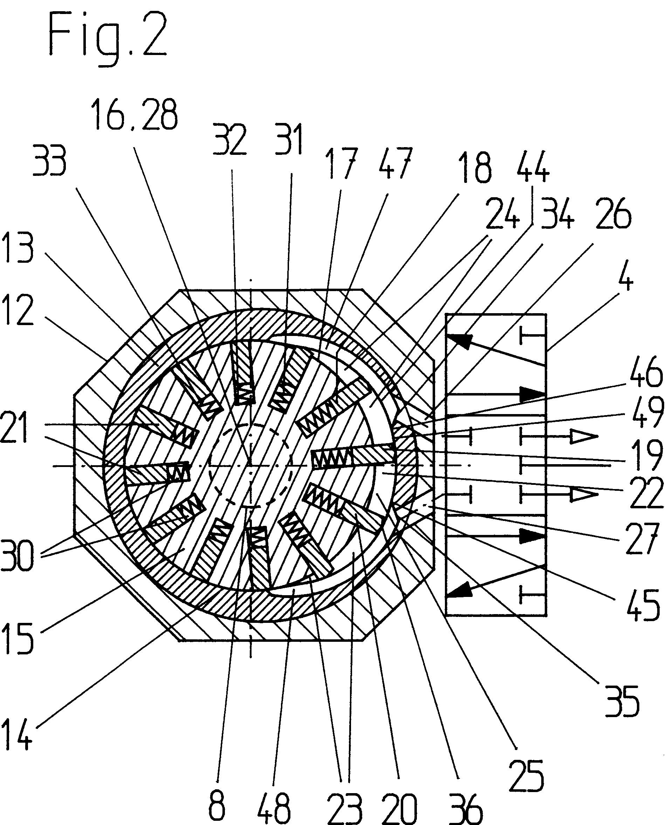

Fig. 2 zeigt einen Schnitt etwa rechtwinklig zur Rotations- bzw. Längsachse 16 der pneumatischen Antriebseinheit 1 durch den Stator 13 und den Rotor 15. Der Stator 13 ist in einem Gehäuse 12 der pneumatischen Antriebseinheit 1 angeordnet und weist einen Innenhohlraum 14 auf. In diesem Innenhohlraum 14 befindet sich der Rotor 15, welcher über die Antriebswelle 8 im Gehäuse 12 gelagert ist. Die Längsachse des Innenhohlraumes 14 des Stators 13 und die Rotationsachse des Rotors 15 fallen zusammen und bilden gemeinsam die Rotations- bzw. Längsachse 16. Entlang der Mantelfläche 17 des Rotors 15 sind in Richtung der Längsachse 16 verlaufende Nuten 30 eingearbeitet, welche der Aufnahme von Dichtleisten 18, 19, 20 und 21 dienen. Diese Dichtleisten 18, 19, 20, 21 sind in den Nuten 30 in radialer Richtung verschiebbar und werden durch elastische Elemente 31 in der Form von Druckfedern gegen den Stator 13 nach aussen gedrückt. Die Federn 31 sind dabei zwischen dem Grund 32 der Nuten 30 und einer Stützfläche 33 der Dichtleisten 18, 19, 20, 21 in die Nuten 30 eingelegt.

In einem Teilbereich entlang der Mantelfläche 17 des Rotors 15 ist in den Stator 13 ein zusätzlicher Hohlraum 25 eingearbeitet, welcher einen Arbeitsraum 22 bildet. An beiden Seitenbereichen des Arbeitsraumes 22 sind zwei ausserhalb liegende und gegen den Arbeitsraum 22 offene Druckausgleichkanäle 47, 48 vorhanden. Diese beiden Druckausgleichkanäle 47, 48 erstrecken sich je über einen Teilbereich des Arbeitsraumes 22 und laufen je in einem Endbereich in Steuerkanten 45, 46 aus. Zwischen den Steuerkanten 45, 46 erstreckt sich die Dichtfläche 49, welche mit der Dichtleiste 19 den Arbeitsraum 22 in zwei Druckkammern 23, 24 trennt. In die beiden Druckausgleichkanäle 47, 48 bzw. den Arbeitsraum 22 münden zwei Druckluftleitungen 26, 27, welche mit dem Steuerventil 4 verbunden sind. Die einander zugewandten Kanten der Eintrittsöffnungen 34, 35 der beiden Druckluftleitungen 26, 27 in den Arbeitsraum 22 stehen in Verbindung mit Steuerkanten 45, 46, welche in den Arbeitsraum 22 auslaufen und mit den Dichtflächen 36 der Dichtleisten 18, 19, 20, 21 zusammenwirken. Im Bereiche der Eintrittsöffnungen 34, 35 der Druckluftleitungen 26, 27 und zwischen diesen Bereichen weist der Arbeitsraum 22 in Richtung der Längsachse 28 eine konstante Breite und in radialer Richtung etwa eine konstante Höhe und somit einen etwa konstanten Querschnitt auf. Von den Eintrittsöffnungen 34, 35 bzw. den Steuerkanten 45, 46 ausgehend bis zu den beidseitigen Endbereichen des Arbeitsraumes 22 nimmt der Querschnitt des Arbeitsraumes 22 gleichmässig ab. Der gesamte Arbeitsraum 22 erstreckt sich im dargestellten Beispiel über etwa 170°. Die Druckausgleichkanäle 47, 48 erstrecken sich je etwa über einen Bereich von etwa 70°, und damit erstreckt sich die Dichtfläche 49 etwa über 30°.

Im dargestellten Beispiel befindet sich die Dichtleiste 19 im Arbeitsraum 22 etwa in der Mitte zwischen den beiden Eintrittsöffnungen 34, 35 der Druckluftleitungen 26, 27, und damit zwischen den Steuerkanten 46, 47. Beidseits dieser Dichtleiste 19 ist je eine Druckkammer 23, 24 gebildet. Die Druckkammer 23 erstreckt sich, bei der Dichtleiste 19 beginnend und in Richtung des Uhrzeigersinnes über einen Bereich des Rotorumfanges von etwa 80° bis 85°. Die Druckkammer 24 erstreckt sich, bei der Dichtleiste 19 beginnend und in Richtung des Gegenuhrzeigersinnes über einen Bereich des Rotorumfanges von ebenfalls ca. 80° bis 85°. Solange in den beiden Druckkammern 23, 24 der gleiche Druck herrscht, steht der Rotor 15 still, d.h. die Dichtleiste 19 ist zwischen zwei Druckluftvolumen eingespannt. Diese beiden Druckluftvolumen sind sehr klein, und bei genügend hohem Druck in beiden Druckkammern 23, 24 ergibt sich eine relativ starre Einspannung. Wird in einer der beiden Druckkammern 23 oder 24 der Druck reduziert, so dreht sich der Rotor 15 um die Rotationsachse 28 bzw. Längsachse 16, und zwar mit einer Geschwindigkeit, welche von den zugeführten bzw. abgeführten Luftmengen abhängt. Da der Rotor 15 bzw. die Dichtleisten 18, 19, 20, 21 symmetrisch zur Achse 28 angeordnet und ausgebildet sind, ist der Rotor 15 in beide Drehrichtungen drehbar. Da sich die Luftvolumen in den Druckkammern 23, 24 auf hohem Druckniveau befinden, klein sind, und sie sich in unmittelbarer Nähe des Steuerventiles 4 befinden, ist auch die Elastizität sehr klein. Die Elastizität der Luftvolumen wird bei Drehbewegungen des Rotors 15 bzw. bei der Erzeugung von Positionierbewegungen für das Mitnehmerelement 2 nicht verändert. Sie bleibt unabhängig von der Länge der Verschiebewege konstant. Um bei der Rotation des Rotors 15 die Volumendifferenzen zwischen den beiden Druckkammern 23, 24 möglichst klein zu halten, kann der Abstand zwischen den beiden Eintrittsöffnungen 34, 35 der Druckluftleitungen 26, 27 in den Arbeitsraum 22 bzw. zwischen den beiden Steuerkanten 45, 46 reduziert werden. Dabei ist am Rotor 15 jedoch immer eine entsprechende Anzahl von Dichtleisten 18, 19, 20, 21 vorhanden, welche gewährleistet, dass sich immer mindestens eine Dichtleiste zwischen den beiden Steuerkanten 45, 46 und damit den Eintrittsöffnungen 34, 35 befindet. Die kleinen, noch auftretenden Volumenabweichungen zwischen den beiden Druckkammern 23, 24 beeinflussen die Arbeitsweise des Steuerventiles 4 nicht, und die Ausführung von Positionier- bzw. Verschiebevorgängen ist mit hoher Genauigkeit möglich.

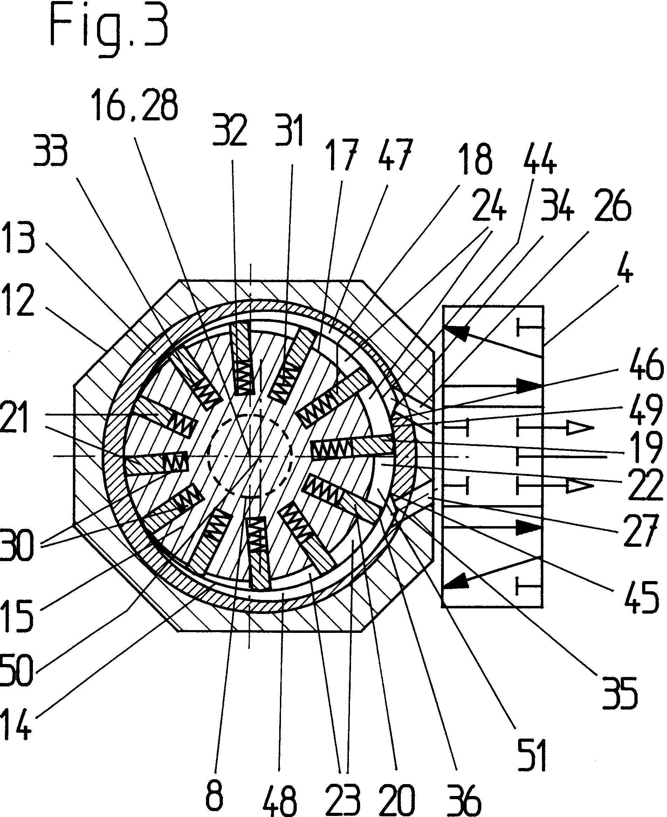

In Fig. 3 ist wiederum ein Querschnitt durch die pneumatische Antriebseinheit gemäss Fig. 1 dargestellt, wobei Funktionsweise und Einzelelemente im wesentlichen gleich ausgebildet sind, wie bei Fig. 2 beschrieben. Der Unterschied zu der in Fig. 2 dargestellten Ausführungsform besteht darin, dass bei diesem Ausführungsbeispiel gemäss Fig. 3 der Stator 13 einen Innenhohlraum 14 aufweist, welcher kreisförmig ist und dessen Durchmesser grösser ist als der Durchmesser des Rotors 15. In zusammengebautem Zustande, wie in Fig. 3 dargestellt, ist die Längsachse des Hohlraumes 14 des Stators 13 exzentrisch zur Rotationsachse 16 des Rotors 15 angeordnet. Da der Hohlraum 14 einen grösseren Durchmesser aufweist als der Rotor 15, ergibt sich durch die exzentrische Verschiebung der beiden Längsachsen 50, 16 zwischen der Mantelfläche 17 des Rotors 15, und der Mantelfläche 44 des Hohlraumes 14 des Stators 13, ein sichelförmiger Hohlraum 51, welcher den Arbeitsraum 22 bildet. Dabei erstreckt sich der sichelförmige Hohlraum 51 über einen Bereich, welcher grösser als 180° ist. Im Grenzfall kann der Bereich auch 360° sein, wobei dann die Dichtleisten 21 die volle Dichtfunktion übernehmen müssen. Die ausssen am Hohlraum 51 liegenden und gegen diesen offenen Druckausgleichkanäle 47, 48 erstrecken sich je über einen Bereich von maximal 175°, im dargestellten Beispiel über 135°. Mit der Exentrizität des Innenhohlraumes 14 des Stators 13 gegenüber dem Rotor 15, wird auch die Höhe bestimmt, um welche die Dichtleiste 19 maximal in radialer Richtung aus dem Rotor 15 ausfährt, wodurch die von Druckluft beaufschlagte Fläche und damit die daraus resultierende Kraft bestimmt ist. Die Dichtleiste 19 liegt dabei an der Dichtfläche 49 des Stators 13 an. Beidseits dieser Dichtfläche 49 sorgen die Druckausgleichkanäle 47 und 48 dafür, dass die übrigen Dichtleisten 18, 20 beidseits mit dem gleichen Druck beaufschlagt werden und damit über diese Dichtleisten 18, 20 kein Drehmoment auf den Rotor 15 ausgeübt wird. Die Ausführungsvariante gemäss diesem Beispiel ermöglicht eine einfachere Herstellung des Stators 13, da der Innenhohlraum 14 die Form eines Kreiszylinders hat. Damit kann dieser Innenhohlraum 14 mit normalen Bearbeitungsmaschinen hergestellt werden. Sollte sich durch die exzentrische Anordnung des Innenhohlraumes 14 des Stators 13 gegenüber der Rotationsachse 16 des Rotors 15 an der Dichtleiste 19 keine genügend grosse Arbeitsfläche ergeben, so kann die hier dargestellte Ausführungsvariante mit der Variante gemäss Fig. 2 kombiniert werden, d.h. zusätzlich zum sichelförmigen Hohlraum 51 kann im Bereiche der Dichtleiste 19 ein ergänzender, sich nach aussen erstreckender Hohlraum gemäss Fig. 2 angeordnet werden. Bei der Ausführungsvariante gemäss Fig. 3 ergeben sich für die Dichtleisten während der Rotationsbewegung in radialer Richtung gleichmässige Beschleunigungen und Verzögerungen, sodass keine Stösse auftreten.

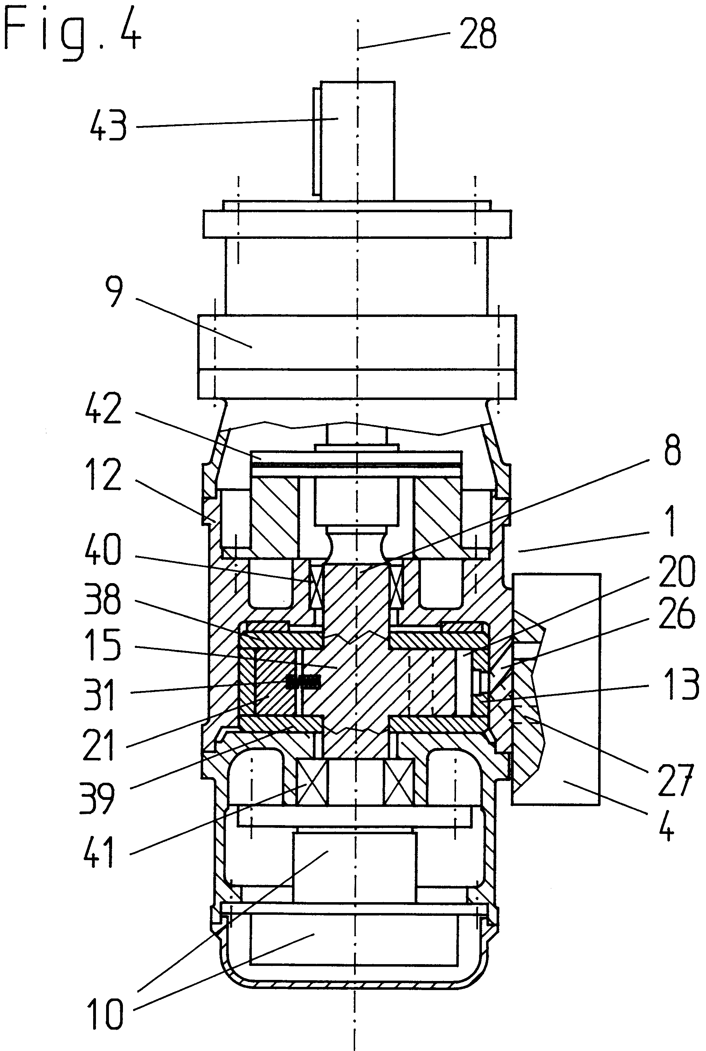

Fig. 4 zeigt die pneumatische Antriebseinheit mit den angebauten zusätzlichen Einrichtungen. Im Zentrum der pneumatischen Antriebseinheit 1 ist auf der auf die Längsachse 28 ausgerichteten Antriebswelle 8 der Rotor 15 angeordnet. Um den Rotor 15 ist der Stator 13 in das Gehäuse 12 der pneumatischen Antriebseinheit 1 eingebaut. Beidseits des Stators 13 bzw. des Rotors 15 befinden sich Dichtelement 38, 39, welche die Seitenflächen des Stators 13 bzw. Rotors 15 und der Dichtleisten 21 gegen das Gehäuse 12 abdichten. Die Antriebswelle 8 ist über Lager 40, 41 im Gehäuse 12 abgestützt. Am unteren Ende des Gehäuses 12 ist ein Drehwinkelsensor 10 angeordnet, welcher sowohl für die Regelung der Winkellage des Rotors 15 als auch als Messelement für die Positionssteuerung 3 dient. Dabei handelt es sich um eine bekannte Ausführung eines Inkrementalgebers bzw. Resolvers. Zusätzlich ist beim dargestellten Beispiel auf der Antriebswelle 8 eine elektromagnetisch betätigbare Feststellbremse 42 angeordnet, mittels welcher bei andauernden Feststellungen in der gleichen Position das Steuerventil 4 entlastet werden kann. Am Ausgangsende der Antriebswelle 8 ist ein Reduktionsgetriebe 9 aufgebaut, welches der Anpassung an die geforderten Kräfteverhältnisse dient. Dieses Getriebe 9 ist mit einer Ausgangswelle 43 versehen. Diese Ausgangswelle 43 dient der Verbindung mit einem in Richtung der Achse 28 verlaufenden Kugelgewindetrieb, oder einem rechtwinklig zur Achse 28 verlaufenden Zahnradgetriebe oder Zahnriementrieb oder einer anderen bekannten Vorschubeinrichtung für lineare bzw. rotative Bewegungen. Direkt an das Gehäuse 12 der pneumatischen Antriebseinheit angeflanscht ist das Steuerventil 4 für die Druckluft, wobei sich in dem dargestellten Beispiel um ein stetig wirkendes 5/3 Wegeventil handelt. Dieses Steuerventil 4 ist über nicht dargestellte elektrische Steuerleitungen mit der in Fig. 1 dargestellten und an sich bekannten Positionssteuerung 3 verbunden und weist zudem entsprechende Druckluftzu- bzw. abführungen auf.

## Patentansprüche

1. Pneumatische Positioniereinrichtung bestehend aus einer pneumatischen Antriebseinheit (1), mindestens einem mit der Antriebseinheit (1) verbundenen Mitnehmerelement (2), einer Positionssteuerung (3) für das Mitnehmerelement (2) und einem Steuerventil (4) für die Druckluft, dadurch gekennzeichnet, dass die pneumatische Antriebseinheit (1) ein Drehantrieb mit einer in beide Drehrichtungen drehbaren Antriebswelle (8) ist, in der pneumatischen Antriebseinheit (1) ein Stator (13) mit einem Innenhohlraum (14) und einem in diesem Hohlraum (14) gelagerten Rotor (15) angeordnet ist, der Rotor (15) mit der Antriebswelle (8) verbunden und in beide Drehrichtungen drehbar ist, am Umfang (17) des Rotors (15) mehrere in Richtung der Rotationsachse (16) verlaufende, radial gerichtete und radial bewegliche Dichtleisten (18, 19, 20, 21) angeordnet sind, in einem Teilbereich zwischen der Mantelfläche (17) des Rotors (15) und der Mantelfläche (44) des Stators (13), im Stator (13) ein Arbeitsraum (22) vorhanden ist, dieser Arbeitsraum (22) mittels der Dichtleisten (18, 19, 20, 21) in zwei Druckkammern (23, 24) unterteilt ist und diese zwei Druckkammern (23, 24) dieses Arbeitsraumes (22) je einen ausserhalb der Druckkammern (23, 24) liegenden und gegen diese offenen, radial verlaufenden Druckausgleichkanal (47, 48) aufweisen, zwischen den beiden Druckausgleichkanälen (47, 48) eine Dichtfläche (49) angeordnet ist, welche durch Steuerkanten (45, 46) an je einem Ende der beiden Druckausgleichkanäle (47, 48) begrenzt ist, die beiden Druckkammern (23, 24) mit je einer Druckluftleitung (26, 27) ausgestattet und über diese Druckluftleitungen (26, 27) mit einem durch die Positionssteuerung (3) gesteuerten Steuerventil (4) für die Druckluft verbunden sind.

2. Pneumatische Positioniereinrichtung nach Patentanspruch 1, dadurch gekennzeichnet, dass die Längsachse des Statorhohlraumes (14) mit der Rotationsachse (16) des Rotors (15) zusammenfällt und der Arbeitsraum (22) durch einen zusätzlich in den Stator (13) eingearbeiteten Hohlraum (25) gebildet ist, welcher gegen die Mantelfläche (17) des Rotors (15) offen ist.

3. Pneumatische Positioniereinrichtung nach Patentanspruch 1, dadurch gekennzeichnet, dass der Statorhohlraum (14) einen kreisförmigen Querschnitt aufweist, der Innendurchmesser des Statorhohlraumes (14) grösser ist als der Aussendurchmesser des Rotors (15), die Längsachse (50) des Statorhohlraumes (14) exzentrisch zur Rotationsachse (16) des Rotors (15) angeordnet ist und der zwischen der Mantelfläche (17) des Rotors (15) und der inneren Mantelfläche (44) des Stators (13) gebildete sichelförmige Hohlraum (51) den Arbeitsraum (22) bildet.

4. Pneumatische Positioniereinrichtung nach einem der Patentansprüche 1 bis 3, dadurch gekennzeichnet, dass die Dichtleisten (18, 19, 20, 21) am Umfange (17) des Rotors (15) in Nuten (30) gelagert sind, welche in Richtung der Rotorachse (16) verlaufen und in radialer Richtung offen sind, und dass zwischen dem Grund (32) dieser Nuten (30) und den Dichtleisten (18, 19, 20, 21) elastische Elemente (31) eingelegt sind, welche die Dichtleisten (18, 19, 20, 21) in radialer Richtung nach aussen gegen den Stator (13) drücken.

5. Pneumatische Positioniereinrichtung nach einem der Patentansprüche 1 bis 4, dadurch gekennzeichnet, dass je ein Randbereich der Druckausgleichkanäle (47, 48) etwa parallel zur Rotationsachse (16) verlaufende Steuerkanten (45, 46) bilden und zwischen diesen beiden Steuerkanten (45, 46) der Querschnitt des Arbeitsraumes (22) etwa konstant ist.

6. Pneumatische Positioniereinrichtung nach einem der Patentansprüche 1 bis 5, dadurch gekennzeichnet, dass der Querschnitt des Arbeitsraumes (22), ausgehend von den Steuerkanten (45, 46) gegen die beiden davon entfernt liegenden Endbereiche des Arbeitsraumes (22), gleichmässig kleiner wird.

7. Pneumatische Positioniereinrichtung nach einem der Patentansprüche 1 bis 5, dadurch gekennzeichnet, dass der Bereich des Arbeitsraumes (22), welcher sich zwischen den Steuerkanten (45, 46) befindet, einen Wirkbereich bildet, und in diesem Wirkbereich die Dichtleisten (18, 19, 20, 21) radial am weitesten aus dem Rotor (15) ausgefahren sind und deren grösste mögliche Fläche mit Druckluft beaufschlagt ist.

8. Pneumatische Positioniereinrichtung nach einem der Patentansprüche 1 bis 7, dadurch gekennzeichnet, dass sich immer mindestens eine Dichtleiste (18, 19, 20, 21) im Wirkbereich des Arbeitsraumes (22) zwischen den beiden Steuerkanten (45, 46) der Druckausgleichkanäle (47, 48) befindet und mindestens diese eine Dichtleiste (19) beidseitig mit vom Steuerventil kontrollierter Druckluft beaufschlagt wird.

9. Pneumatische Positioniereinrichtung nach Patentanspruch 8, dadurch gekennzeichnet, dass während den Drehbewegungen des Rotors (15) eine Seite der Dichtleisten (19) im Wirkbereich des Arbeitsraumes (22) mit etwa dem vollen Luftdruck beaufschlagt und die Gegenseite der Leisten (19) einem reduzierten Druck ausgesetzt ist.

10. Pneumatische Positioniereinrichtung nach einem der Patentansprüche 1 bis 9, dadurch gekennzeichnet, dass der Wirkbereich zwischen den Steuerkanten (45, 46) der beiden Druckausgleichkanäle (47, 48) etwa einen Drehbereich von 30° umfasst.

11. Pneumatische Positioniereinrichtung nach einem der Patentansprüche 1 bis 10, dadurch gekennzeichnet, dass auf der Welle (8) des Rotors (15) der pneumatischen Antriebseinheit (1) ein Drehwinkelsensor (10) angeordnet, dieser Sensor (10) mit einer Positionssteuerung (3) und diese Steuerung (3) mit dem Steuerventil (4) verbunden ist, und diese Elemente den Regelkreis für die Drehwinkellage des Rotors (15) bilden.

12. Pneumatische Positioniereinrichtung nach Patentanspruch 11, dadurch gekennzeichnet, dass der Drehwinkelsensor (10) und/oder die Positionssteuerung (3) mit einer Wegmesseinrichtung verbunden ist und diese Wegmesseinrichtung die Position des Mitnehmerelementes (2) bestimmt und diese Komponenten den Regelkreis für die Position des Mitnehmerelementes (2) bilden.

13. Pneumatische Positioniereinrichtung nach einem der Patentansprüche 1 bis 12, dadurch gekennzeichnet, dass die pneumatische Antriebseinheit (1), die Messelemente und das Steuerventil (4) eine kompakte Baueinheit bilden.

14. Pneumatische Positioniereinrichtung nach einem der Patentansprüche 1 bis 13, dadurch gekennzeichnet, dass die mit dem Rotor (15) verbundene Antriebswelle (8) direkt oder über ein Getriebe (9, 11) mit dem Mitnehmerelement (2) zusammenwirkt und dieses antreibt und positioniert.

15. Pneumatische Positioniereinrichtung nach Patentanspruch 14, dadurch gekennzeichnet, dass das Getriebe (9, 11) ein Zahnradgetriebe oder Kugelgewindetrieb oder ein Zahnstangentrieb oder ein Zahnriementrieb ist.
